# EUROPEAN PATENT SPECIFICATION

(11) **EP 3 024 227 B1**
(45) Date of publication and mention of the grant of the patent: **25.09.2019**
(21) Application number: 15195239.7
(22) Date of filing: 18.11.2015
(51) Int. Cl.: H04N 7/18, G08B 13/196

(54) **IMAGE PROCESSING APPARATUS AND IMAGE PROCESSING METHOD**
BILDVERARBEITUNGSVORRICHTUNG UND BILDVERARBEITUNGSVERFAHREN
APPAREIL ET PROCÉDÉ DE TRAITEMENT DES IMAGES

(30) Priority: 19.11.2014 JP 2014235000
(43) Date of publication of application: 25.05.2016
(73) Proprietor: CANON KABUSHIKI KAISHA, Ohta-ku Tokyo 146-8501 (JP)
(72) Inventor: TSUNEMATSU, Yuichi, Ohta-ku, Tokyo (JP)
(74) Representative: Hitching, Peter Matthew

(56) References cited:
- EP-A1- 2 642 747
- US-A1- 2011 149 072
- US-A1- 2014 267 706

## Description

### BACKGROUND OF THE INVENTION

### Field of the Invention

The present invention relates to an image processing apparatus, an image processing method, and an image processing system in which settings for image capturing by sequential positioning of an image capturing apparatus, such as a camera.

### Description of the Related Art

In recent years, some cameras can be used in a state those cameras are connected to a network and can perform image capturing over a wider range by changing an image capturing angle of view, as cameras controllable from a computer. For example, such cameras include a pan-tilt-zoom (PTZ) camera, a fish-eye camera, and a multi-lens camera. The PTZ camera includes a panhead, and has a pan angle, a tilt angle, and a zoom magnification that are variable. The fish-eye camera includes a fish-eye lens and can cover a wide range with single image capturing. The multi-lens camera includes a plurality of lenses and image sensors in a single device body and can distribute an image of any angle of view cut out from a panorama image obtained by combining in the camera.

These cameras have what is known as a preset tour function of performing image capturing while sequentially switching a preset image capturing position (angle of view) based on preset information (image capturing angle of view, image capturing time period, image capturing order, and the like) set in advance by a user. With the function, a single camera can perform image capturing and recording over a wider range, whereby an attempt to achieve more efficient monitoring is facilitated.

A technique discussed in Japanese Patent Application Laid-Open No. 2011-188258 is a camera system that performs preset tour image capturing. In this technique, when the face of a person is detected while the preset tour is in process, the angle of view directed to the position is newly added as a preset image capturing position.

However, the technique discussed in Japanese Patent Application Laid-Open No. 2011-188258 described above requires the user to manually perform an initial setting for the preset tour. Thus, the setting depends on the speculation of the user and the like, and thus might cause the preset tour to start with an angle of view unsuitable for monitoring or image analysis set as a preset image capturing position. For example, a low traffic path might be captured or the angle of view of the camera might be too low to accurately recognize a person.

Furthermore, the technique discussed in Japanese Patent Application Laid-Open No. 2011-188258 described above cannot register an angle of view not included in the preset tour as a new preset image capturing position. Thus, when the preset image capturing position set in advance is not appropriate, the preset image capturing position is not appropriately updated, and thus a monitoring target in the monitoring target range cannot be appropriately monitored. Document EP 2642747 discloses a movable monitoring device having at least one preset image capturing position. Document Us 2011/0149072 discloses a method for operating a surveillance system by performing an automated visual surveillance tour in two separate portions. Document US 2014/0267706 discloses an auto-learning smart tour for video surveillance.

### SUMMARY OF THE INVENTION

According to a first aspect of the present invention, there is provided an information processing apparatus as specified in claims 1 to 12. According to a second aspect of the present invention, there is provided a method for controlling an information processing apparatus as specified in clams 13 and 14, and a program containing instructions for a computer to execute those methods as specified in claim 15.

Further features of the present invention will become apparent from the following description of exemplary embodiments with reference to the attached drawings.

### BRIEF DESCRIPTION OF THE DRAWINGS

Fig. 1 is a diagram illustrating a network connection configuration representing an example of an image processing system.
Fig. 2 is a functional block diagram of apparatuses.
Fig. 3 a diagram exemplarily illustrating detection results and output results of moving body detection processing and human body detection processing.
Fig. 4 is a diagram illustrating an example of a hardware configuration of a server apparatus.
Fig. 5 is a diagram illustrating a first camera orientation.
Fig. 6 is a diagram illustrating a second camera orientation.
Fig. 7 is a diagram illustrating a third camera orientation.
Fig. 8 is a flowchart illustrating a procedure of pre-analysis processing executed in a camera.
Fig. 9 is a diagram illustrating an example of an image analysis result.
Fig. 10 is a flowchart illustrating a procedure of image analysis processing executed in a server apparatus.
Fig. 11 is a diagram illustrating an example of score information calculated based on an image analysis result obtained with the first camera orientation.
Fig. 12 is a diagram illustrating an example of score information calculated based on an image analysis result obtained with the second camera orientation.
Fig. 13 is a diagram illustrating an example of score information calculated based on an image analysis result obtained with the third camera orientation.
Fig. 14 is a diagram illustrating an example of a score tabulation result.
Fig. 15 is a diagram illustrating a network connection configuration representing an example of a network camera system.
Fig. 16 is a diagram illustrating an example of a camera arrangement.

### DESCRIPTION OF THE EMBODIMENTS

An exemplary embodiment of the present invention is described in detail below with reference to the attached drawings.

The exemplary embodiment described below is an example of a unit that implements the present invention, and is appropriately corrected and modified by a configuration and various conditions of an apparatus employing the present invention. The present invention is not limited to the exemplary embodiment described below.

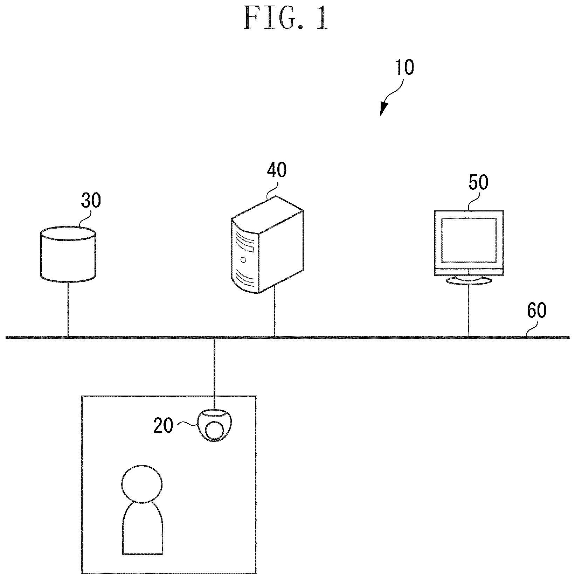

Fig. 1 is a diagram illustrating a network connection configuration representing an example of an operation environment of an image processing system according to the present exemplary embodiment. The image processing system according to the present exemplary embodiment is applied to a network camera system.

A network camera system 10 includes a network camera (hereinafter, also simply referred to as a "camera") 20, a storage apparatus 30, an image analysis server apparatus (hereinafter, also simply referred to as a "server apparatus") 40, and an image display apparatus 50. The camera 20, the storage apparatus 30, the server apparatus 40, and the image display apparatus 50 are connected to each other through a local area network (LAN) 60 as a network line. The network line is not limited to the LAN, and may be the Internet, a wide area network (WAN), or the like.

The camera 20 is a PTZ camera having a pan function, a tilt function, and a zoom function. The camera 20 has what is known as a preset tour function in which capturing image is performed within a monitoring target range at predetermined preset image capturing positions which is switched in a predetermined order, in accordance with preset information.

The preset information is a setting (a preset tour setting item) related to the present tour function, and includes information related to a present image capturing position and information related to the preset tour. More specifically, the information related to the preset image capturing position indicates an image capturing angle of view (pan, tilt, and zoom positions). The information related to the preset tour indicates an image capturing time period at each of the preset image capturing positions and indicates a switching order (image capturing order) of the preset image capturing positions. Thus, the information related to the preset image capturing position includes information related to an image capturing direction of the camera 20.

The camera 20 captures images of an object while turning into a plurality of preset image capturing positions, and at the same time, transmits the image data thus obtained to the storage apparatus 30 through the LAN 60. The camera 20 can execute image analysis processing based on the captured image data, and can transmit the image analysis result to the storage apparatus 30 through the LAN 60.

The camera 20 further has a function of changing camera image capturing setting, such as a focus setting, as well as the camera angle of view according to an instruction from the external.

The camera 20 is not limited to the PTZ camera, and may be a fish-eye camera, a multi-lens camera, or the like.

The storage apparatus 30 is a recording apparatus and includes a write-in area to which the image data and the image analysis result transmitted from the camera 20 are written. The storage apparatus 30 reads the image data and the image analysis result from the camera 20 through the LAN 60.

The server apparatus 40 reads the image data and the image analysis result, which are recorded in the storage apparatus 30, through the LAN 60. Then, the server apparatus 40 executes preset setting processing of automatically setting and updating the preset information by using collected data. In the preset setting processing, the preset information suitable for monitoring a monitoring target in the monitoring target range is determined. For example, an angle of view that is likely to capture a person moving in the monitoring target range is set as the preset image capturing position. The preset setting processing will be described below.

The image display apparatus 50 is included in a personal computer (PC) for example, and can be operated by a user (for example, a surveillance agent). The image display apparatus 50 has a function of playing and displaying image data distributed from the camera 20. The image display apparatus 50 also functions as an input unit on which various operations, such as a camera setting including a camera angle of view operation, the preset tour function, and the like, are performed.

A wired or wireless physical connection to the LAN 60 may be established. The number of each of the storage apparatus 30 and the image display apparatus 50, which are connected to the LAN 60, is not limited to that illustrated in Fig. 1. Any number of the storage apparatuses 30 and the image display apparatuses 50 may be provided as long as each of the apparatuses can be identified with an address and the like.

The monitoring target may be at least one of a moving body, a human body, and a face of a subject. Alternatively the monitoring target may be any moving object, such as a vehicle for example, other than the moving human body as described above.

Next, a specific configuration of each of the apparatuses forming the network camera system 10 will be described.

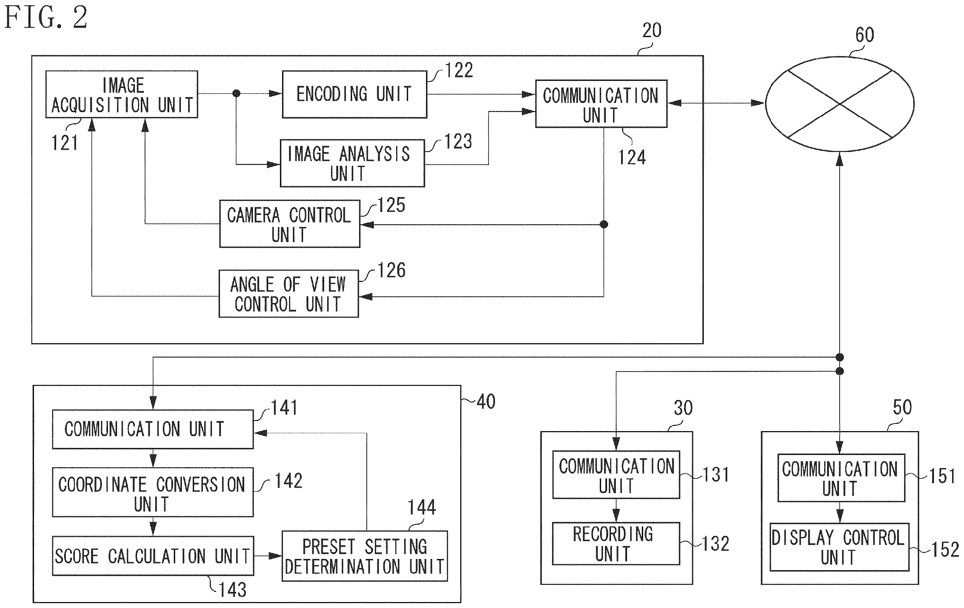

Fig. 2 is a functional block diagram of the apparatuses described above.

The camera 20 includes an image acquisition unit 121, an encoding unit 122, an image analysis unit 123, a communication unit 124, a camera control unit 125, and an angle of view control unit 126.

The image acquisition unit 121 converts an optical image, which is imaged on an image sensing surface of an image capturing unit described later, into a digital electrical signal through photoelectric conversion, and processes the digital electrical signal with pixel interpolation and color conversion processing to generate an RGB or YUV digital image. Then, the image acquisition unit 121 executes predetermined calculation processing by using the digital image thus obtained, and executes image correction processing, for correcting white balance, sharpness, and contrast and performing color conversion based on the obtained calculation result.

The image acquisition unit 121 outputs a digital image signal (image data) as a result of the processing described above to the encoding unit 122 and the image analysis unit 123.

The encoding unit 122 encodes the digital image signal input from the image acquisition unit 121, by setting a framerate and performing compression for network distribution. For example, the compression for the distribution is based on a predetermined standard, such as Moving Picture Experts Group phase 4 (MPEG4), H.264, Joint Photographic Experts Group (JPEG), or Motion-JPEG (MJPEG).

The image analysis unit 123 detects a monitoring target in an image by executing image analysis processing, such as detection of a moving body moving within an image (moving body detection), detection of a human body moving within an image (human body detection), and face recognition.

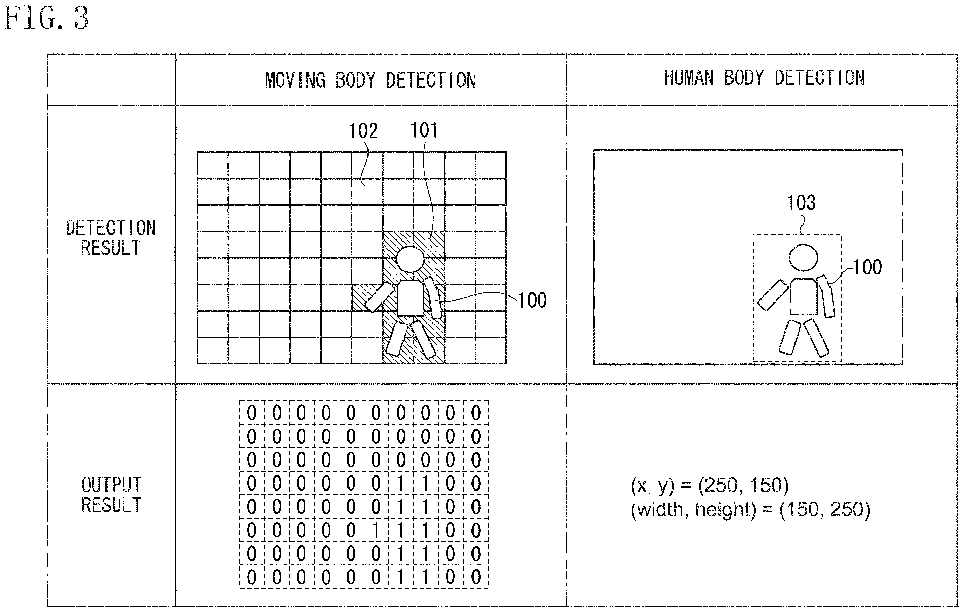

Fig. 3 is a diagram illustrating an example of detection and output results of the moving body detection and the human body detection.

A moving body may be detected with various methods. For example, in one method, sequential frame images are compared with each other, and a portion where a difference of a predetermined level or higher is detected is determined as a moving body. In another method, a current image is compared with a background image, which is prepared in advance and corresponds to the image, and a portion where a difference of a predetermined level or higher is detected is determined as a moving body.

As an detection result of a moving body, in a case where the processing is executed with an image divided into blocks (8 vertical × 10 horizontal blocks in the example in Fig. 3) having the same size, a result of determining whether an area is a background area or a moving body area is obtained for each block. For example, as illustrated in Fig. 3, in a case where the image includes a moving human body 100, an area involving a movement is a moving body area 101 and an area involving no movement is a background area 102. Rectangular information may be acquired by merging the results.

For example, as illustrated in Fig. 3, the output result of the moving body detection is obtained in a form of binary information indicating whether each block is the moving body area 101 or the background area 102. In the preset exemplary embodiment, "1" represents the moving body area 101 and "0" represents the background area 102.

As a method of detecting a human body, a method of checking whether the image includes a predetermined image pattern (template matching), a method of employing a mechanical learning system for statistically identifying a feature in a local image, and the like may be used.

As the result of the human body detection, for example, as illustrated in Fig. 3, a rectangular area 103 including the human body 100 from head to toe (or upper half of the human body 100) can be acquired.

For example, as illustrated in Fig. 3, the output result of the human body detection is obtained in a form of the rectangular information represented by image coordinates (x, y) at the center of the rectangular area 103 and a size (width, height) of the rectangular area 103.

The face recognition can be performed by acquiring an image similar to a target face from a plurality of images registered in advance, together with a likelihood of the image.

These image analysis results are transmitted to the communication unit 124 in a state where information on a camera that has performed the analysis is associated with a camera orientation (pan, tilt, zoom, installed position, and the like) at the time of image capturing, an image frame number, and time information.

The communication unit 124 communicates with a communication unit 131 of the storage apparatus 30, a communication unit 141 of the server apparatus 40, and a communication unit 151 of the image display apparatus 50, through the LAN 60. The communication unit 124 transmits image data output from the encoding unit 122 and an image analysis result output from the image analysis unit 123, to the storage apparatus 30.

The communication unit 124 receives a camera operation command, such as an instruction to change an captured image size, a framerate, and a focus setting, through the LAN 60, and transmits the received camera operation command to the camera control unit 125. The communication unit 124 further receives an angle of view control command, such as an instruction to update the pan and tilt positions and update a display image area for the fish-eye camera, through the LAN 60, and transmits the angle of view control command to the angle of view control unit 126.

The camera control unit 125 controls the captured image size, the framerate, and the focus setting, in accordance with the camera operation command described above. The angle of view control unit 126 controls the angle of view and the orientation of the camera 20 in accordance with the angle of view control command described above.

The storage apparatus 30 includes the communication unit 131 and a recording unit 132.

The communication unit 131 receives the image data and the image analysis result transmitted from the camera 20, and transmits the image data and the image analysis result to the recording unit 132.

The recording unit 132 records the image data and the image analysis result, transmitted from the communication unit 131, in a memory and the like.

The server apparatus 40 includes the communication unit 141, a coordinate conversion unit 142, a score calculation unit 143, and a preset setting determination unit 144.

The communication unit 141 receives an image data file, which has been transmitted from the camera 20 and recorded in the storage apparatus 30, through the LAN 60, and transmits the image data file to the coordinate conversion unit 142. The communication unit 141 transmits preset information, set by preset setting processing described below, to the camera 20 through the LAN 60.

The coordinate conversion unit 142 receives the image analysis result from the communication unit 141, and performs coordinate conversion for tabulation. More specifically, coordinate information of the image analysis result is converted into positional information in the entire image capturing range of the camera 20.

The score calculation unit 143 calculates a score based on the information obtained by the conversion by the coordinate conversion unit 142. The score is information corresponding to a detection result (for example, a detection frequency) of the monitoring target in each of a plurality of areas in the image capturing range of the camera 20.

The preset setting determination unit 144 executes the preset setting processing of setting the preset information based on the score calculated by the score calculation unit 143.

For example, in the present exemplary embodiment, the preset setting processing is executed at the time of initial setup that proceeds as follows: when a user inputs a preset setting start instruction through the image display apparatus 50, the camera 20 receives the preset setting start instruction and executes the image analysis processing described above for a predetermined period of time. Then, the server apparatus 40 receives the image analysis result and executes the preset setting processing.

As described above, the camera 20 executes the image analysis processing before the preset setting processing of automatically determining and updating the preset information starts. In this pre-analysis processing, the camera 20 repeats the image capturing in the monitoring target range and the image analysis processing while switching the camera angle of view (camera orientation). In a case where the camera 20 is a PTZ camera, the camera angle of view can be switched by updating pan, tilt, and zoom positions. In a case where the camera 20 is a fish-eye camera or a multiple lens camera, the camera angle of view can be switched by changing a display image area.

The timing at which the preset setting processing is not limited to the one described above, and the preset setting processing may be periodically executed during a normal preset tour (while the camera 20 is performing image capturing and recording operations) for example. The preset setting processing may be executed not periodically but every time the monitoring target (moving body or the human body) is not detected for a predetermined period of time.

The image display apparatus 50 includes the communication unit 151 and a display control unit 152.

The communication unit 151 receives the image data file, which has been transmitted from the camera 20 and recorded in the storage apparatus 30, through the LAN 60, and transmits the image data file to the display control unit 152.

The display control unit 152 displays the image data and the image analysis result, received from the communication unit 151, on a screen.

### (Hardware Configuration)

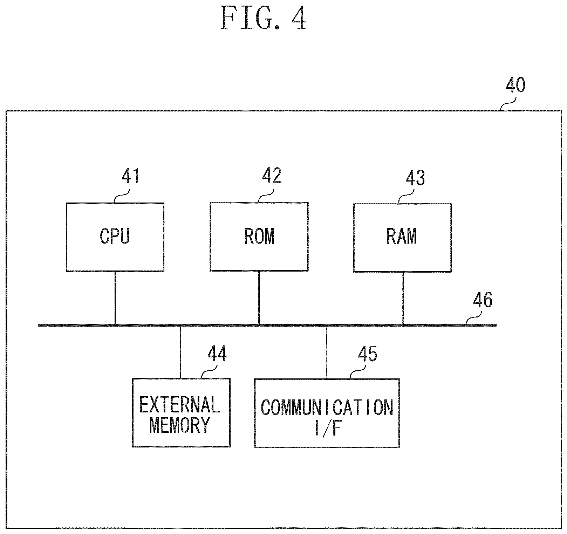

Fig. 4 is a diagram illustrating an example of a hardware configuration of the server apparatus 40.

The server apparatus 40 includes a central processing unit (CPU) 41, a read only memory (ROM) 42, a random access memory (RAM) 43, an external memory 44, a communication I/F 45, and a system bus 46.

The CPU 41 performs overall control on operations in the server apparatus 40 and controls the components (42 to 45) through the system bus 46.

The ROM 42 is a nonvolatile memory that stores a control program required for the CPU 41 to execute processing and the like. The program may also be stored in the external memory 44 and a detachably attached storage medium (not illustrated).

The RAM 43 functions as a main memory, a work area, and the like for the CPU 41. Thus, the CPU 41 loads the required program and the like onto the RAM 43 from the ROM 42, and executes the program and the like to implement various functional operations.

For example, the external memory 44 stores various types of data, various types of information, and the like required for the CPU 41 to execute the processing using the program. For example, the external memory 44 further stores various types of data, information, and the like obtained by the processing using the program and the like by the CPU 41.

The communication I/F 45 is an interface for communicating with external apparatuses (the storage apparatus 30 and the image display apparatus 50). For example, the communication I/F 45 is a LAN interface.

The system bus 46 connects the CPU 41, the ROM 42, the RAM 43, the external memory 44, and the communication I/F 45 with each other in such a manner that the components of the server apparatus 40 can communicate with each other.

Functions of the components of the server apparatus 40 illustrated in Fig. 2 are implemented in such a manner that the CPU 41 executes a program stored in the ROM 42 or the external memory 44.

The camera 20 includes a hardware configuration, such as the image capturing unit, in addition to the configuration corresponding to the components illustrated in Fig. 2. The image capturing unit for capturing an image of an object includes an image sensing element, such as a complementary metal oxide semiconductor (CMOS) sensor, a charge coupled device (CCD) sensor, or the like.

The image display apparatus 50 includes a hardware configuration, such as an input unit and a display unit, in addition to the configuration corresponding to the components illustrated in Fig. 2. The input unit includes a keyboard and a pointing device, such as a mouse. A user of the image display apparatus 50 can issue an instruction to the image display apparatus 50 through the input unit. The display unit includes a monitor, such as a liquid crystal display (LCD).

### (Procedure Of Pre-Analysis Processing In Camera 20)

Next, the pre-analysis processing executed in the camera 20 will be described in detail.

In the pre-analysis processing, a plurality of camera orientations covering the entire monitoring target range is set, and image analysis is performed for each camera orientation. Here, the image analysis is performed by switching the camera orientation every time a predetermined period of time elapses (for example, every five minutes). The monitoring target range can be designated by the user or may be specified based on the movable pan, tilt, zoom range. In the present exemplary embodiment, the image analysis is performed by capturing an image of the entire monitoring target range in the pre-analysis processing. Alternatively, for example, the image analysis may be performed by capturing an image of a partial area of the entire monitoring target range, obtained from the movable pan, tilt, and zoom range, designated by user.

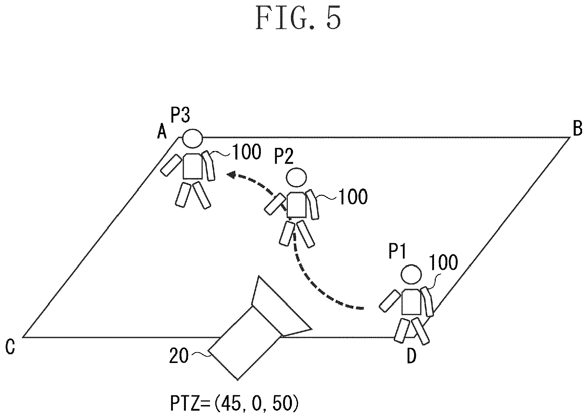

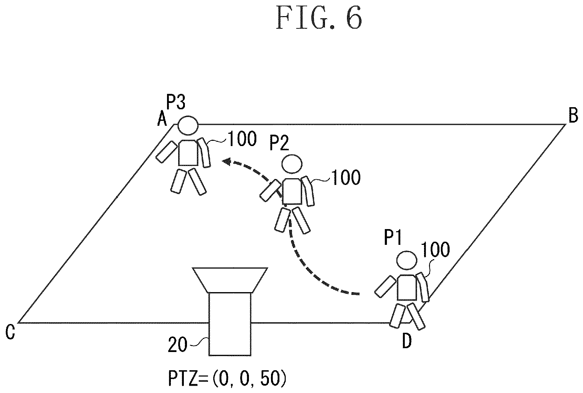

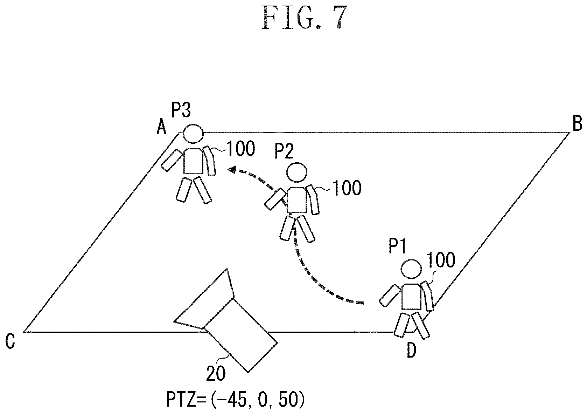

An example is described where the monitoring target range is an ABCD plane illustrated in Fig. 5 and the human body 100 can move in the monitoring target range from a first point P1 to a third point P3 via a second point P2. Here, a camera orientation toward the right (PTZ = (45, 0, 50)) illustrated in Fig. 5 is set as a first camera orientation. A camera orientation toward the center (PTZ = (0, 0, 50)) illustrated in Fig. 6 is set as a second camera orientation. A camera orientation toward the left (PTZ = (-45, 0, 50)) illustrated in Fig. 7 is set as a third camera orientation.

The numerical values PTZ respectively represent a pan position, a tilt position, and a zoom position and each indicate an angle with respect to a camera center. The pan and tilt values each take a positive value when the camera 20 is directed rightward and downward. The value of the zoom is a horizontal angle of view.

In the pre-analysis processing, the camera orientation is switched from the first camera orientation to the second camera orientation, and then to the third camera orientation, and the image capturing is performed on image capturing ranges respectively corresponding to the camera orientations.

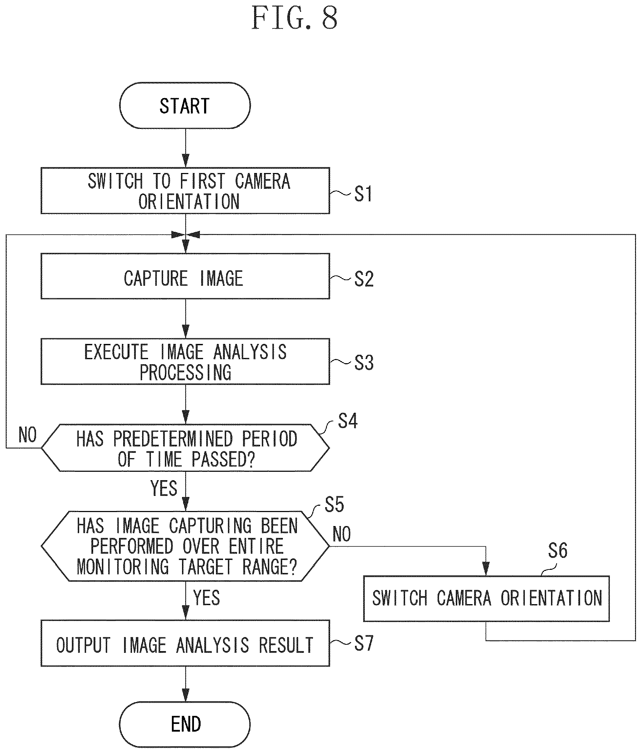

Fig. 8 is a flowchart illustrating a procedure of the pre-analysis processing.

The pre-analysis processing is implemented in such a manner that a CPU of the camera 20 executes a program required for executing processing corresponding to the flowchart illustrated in Fig. 8.

In step S1, the camera 20 switches the camera orientation to the first camera orientation set in advance, and the processing proceeds to step S2.

In step S2, the camera 20 captures an image within the image capturing range, and the processing proceeds to step S3.

In step S3, the camera 20 analyzes the image captured in step S2, whereby the output result illustrated in Fig. 3 is obtained.

Next, in step S4, the camera 20 determines whether the image capturing and the image analysis are performed with the same camera orientation for a predetermined period of time (for example, five minutes) set in advance. In a case where the predetermined period of time has not elapsed (NO, in step S4), the processing returns to step S2 so that the image capturing and the image analysis are continued with the same camera orientation. On the other hand, in a case where the predetermined period of time has elapsed (YES, in step S4), the processing proceeds to step S5.

In step S5, the camera 20 determines whether the image capturing has been performed over the entire monitoring target range by switching the camera orientation. In a case where there is an area, in the monitoring target range, where the image capturing has not been performed, that is, in a case where there are any camera orientations, among the plurality of camera orientations set in advance, with which the image capturing and the image analysis have not been completed (NO in step S5), the processing proceeds to step S6.

In step S6, the camera 20 switches the camera orientation to the camera orientation with which the image capturing and the image analysis have not been performed, and the processing proceeds to step S2.

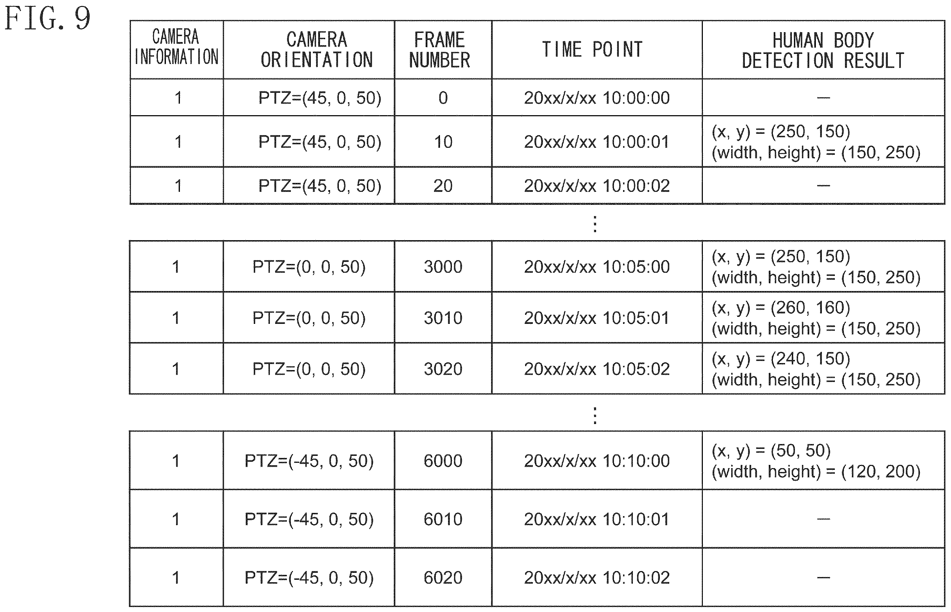

On the other hand, in a case where the camera 20 determines that the image capturing has been performed over the entire monitoring target range in step S5 described above (YES in step S5), the processing proceeds to step S7. In step S7, the camera 20 outputs the image analysis result obtained with each camera orientation. Fig. 9 is a diagram illustrating an example of the image analysis result.

In the example illustrated in Fig. 9, a frame number 0 is given to 10:00:00, 10 images are analyzed within a second, and the image analysis result (human body detection result) is recorded once in every second. The camera orientation is switched every five minutes.

In the example illustrated in Fig. 9, a small number of human body detection results is obtained with the camera orientation toward the right (PTZ = (45, 0, 50)) and the camera orientation toward the left (PTZ = (-45, 0, 50)), and that the human body detection result is obtained every second with the camera orientation toward the center (PTZ = 0, 0, 50)). Thus, the result indicates that each of the camera orientations toward the right and the left has the angle of view not suitable for the image analysis and that the camera orientation toward the center has the angle of view and the size suitable for the image analysis and is suitable for the recording.

Thus, the server apparatus 40 generates a human body detection frequency map (a map indicating an area, in the monitoring target range, where a human body detection frequency is high) in the monitoring target range based on the image analysis result obtained by the camera 20, and sets the preset information suitable for monitoring and image analysis based on the human body detection frequency map.

### (Procedure Of Preset Setting Processing In Server Apparatus 40)

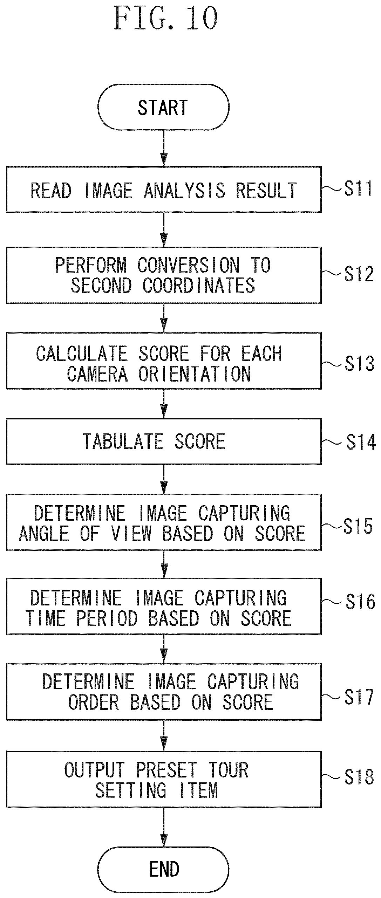

Fig. 10 is a flowchart illustrating a procedure of the preset setting processing.

The preset setting processing is implemented in such a manner that the CPU 41, illustrated in Fig. 4, executes a program required for executing processing corresponding to the flowchart illustrated in Fig. 10.

In step S11, the server apparatus 40 reads the image analysis result obtained through the pre-analysis processing by the camera 20, and the processing proceeds to step S12.

In step S12, the server apparatus 40 converts coordinate information in the image analysis result read in step S11 into positional information in the monitoring target range. Thus, the inner image coordinates are converted into the inner monitoring target range coordinates as second coordinates.

Various coordinate conversion methods may be employed. A simple method is, for example, a method in which about four points of any selected point in an image and actual coordinate information are stored for each camera orientation in such a manner that the four points and the actual coordinate information are associated with each other, and projection conversion is performed based on this information. An accurate method is, for example, a method in which calibration is performed on the camera in advance, and a determinant is prepared for performing conversion from the captured image to a world coordinate system based on information indicating the installed height, pan, tilt, and zoom positions.

Next, in step S13, the server apparatus 40 calculates a score for each camera orientation, based on the image analysis result after the coordinate conversion to the second coordinates in step S12. In the present exemplary embodiment, the score is the number of human body detections in each of a plurality of areas in the monitoring target range.

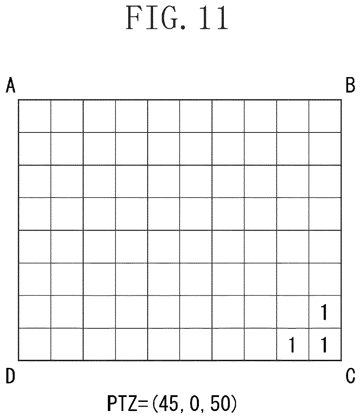

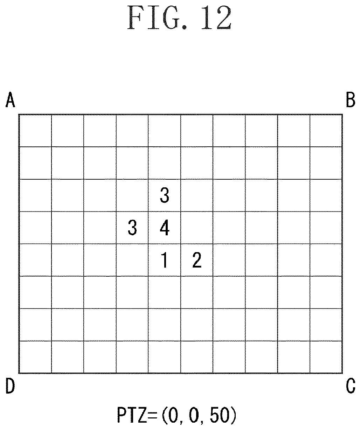

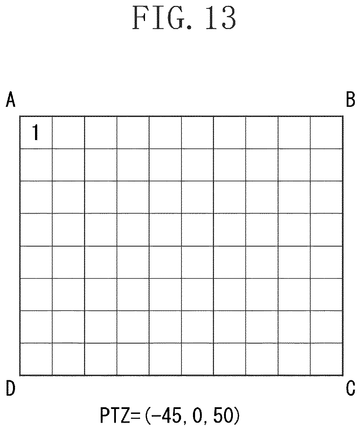

For example, as illustrated in Figs. 11 to 13, the score information can be represented by the ABCD plane representing the monitoring target range on which a numerical value, representing the number of human body detections, is mapped. Fig. 11 is a diagram illustrating score information calculated based on the image analysis result obtained with the first camera orientation (PTZ = (45, 0, 50)). Fig. 12 is a diagram illustrating score information calculated based on the image analysis result obtained with the second camera orientation (PTZ = (0, 0, 50)). Fig. 13 is a diagram illustrating score information calculated based on the image analysis result obtained with the third camera orientation (PTZ = (-45, 0, 50)).

The score is the number of human body detections according to the present exemplary embodiment. Alternatively, the score may be the number of moving body detections or the number of facial recognitions.

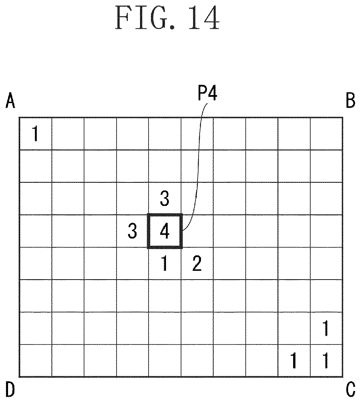

Next, in step S14, the server apparatus 40 tabulates the scores calculated in step S13 for each of the camera orientations, and the processing proceeds to step S15. Fig. 14 is a diagram illustrating an example where the scores illustrated in Figs. 11 to 13 each corresponding to a different one of the camera orientations are tabulated. By thus merging the scores obtained for each of the camera orientations, the human body detection frequency map in the monitoring target range can be generated. Thus, the area, in the entire monitoring target range, where the number of human body detection is large (an area where a person frequently appears) can be identified.

In step S15, the server apparatus 40 determines the angle of view, which is one of the setting items for the preset tour, based on the result of tabulating the scores in step S14. More specifically, a position (area) with the score higher than a predetermined threshold is selected, and the angle of view is selected to set the position as the center of the captured image. The angle of view may be set in such a manner that the selected position is included within a predetermined range from the center of the captured image, instead of strictly matching the center of the captured image.

For example, in a case where the threshold is 3, a position P4 that is the fifth block to the right and the fourth block to the bottom from the upper left corner (point A) in Fig. 14 is selected. Thus, the angle of view with which the position P4 is set at the center of the captured image is newly set as the preset image capturing position. When there is a plurality of candidates, all the candidates may be newly set as the preset image capturing position, or a predetermined number of candidates with the highest scores may be selected.

For example, a zoom magnification, which is one factor for selecting the angle of view, may be set in such manner that high enough zooming with a magnification for capturing only the image of the selected area is achieved. Alternatively, in a case where the moving body detection or the human body detection is obtained around the selected area as illustrated in Fig. 14, the zoom magnification may be set in such a manner that the areas are also included. The zoom magnification may be determined not based on areas, and may be set in accordance with an average value of the sizes of the human or moving bodies, the median value of the sizes, or the most frequently detected human or moving body size (mode).

Then, in step S16, the server apparatus 40 determines an image capturing time period, which is one of the setting items for the preset tour, based on the score tabulation result obtained in step S14.

The image capturing time period is set to be longer, as the human body detection frequency is higher, based on the score information. By thus setting the image capturing time period to be long for an area with a high score (human body detection frequency), an image including a person can be captured for a longest possible period of time. The image capturing time period may be fixed.

Then, in step S17, the server apparatus 40 determines an image capturing order, which is one of the setting items for the preset tour, based on the score tabulation result obtained in step S14. The image capturing order is set in such manner that the image capturing is performed in descending order of the score from an area with a highest score. The image capturing order may be registered in advance.

Then, in step S18, the server apparatus 40 outputs the preset tour setting items, determined in step S15 to step S17, to the camera 20 as the new preset tour setting values for being directly used.

The preset tour setting items may be output to the image display apparatus 50. In this case, the image display apparatus 50 may present the candidates of the preset tour settings to the user, and may wait for a confirmation operation by the user.

In the score tabulation in step S14 described above, the scores obtained with the camera orientations are simply merged. For example, in the score tabulation, an image analysis result smaller than a predetermined size and a facial recognition result with likelihood lower than predetermined likelihood may be filtered out. Thus, the effect caused by a faulty image analysis result becomes less critical. Information, such as a position of the monitoring target in the captured image, as well as the size and the detected likelihood of the monitoring target, may be weighted, and the score may be calculated further taking such information into consideration.

A score calculating method may be switched in accordance with a purpose of installing the monitoring camera. In a case where the purpose is to count the number of people or check crowdedness, image capturing is preferably performed on an area in which many people are likely to appear. Thus, a score calculating method in which a higher score is given to an area, which has obtained a larger number of image analysis results (area with a high detection frequency), may be selected.

In a case where the purpose is for surveillance for a store, image capturing is preferably performed on a portion where shoplifting is likely to occur. Thus, in such a case, a score calculating method in which a higher score is given to an area, which has obtained a smaller number of image analysis results (area with a low detection frequency), may be selected.

The score calculation method may be selected not only in accordance with the purpose of installing the camera, but also in accordance with the quantity of image analysis results obtained in the monitoring target range. For example, in a case where a large number of image analysis results has been obtained in the monitoring target range and thus it is assumed that a large number of people has appeared over the entire range, a calculation method may be selected in which an area with a small number of people (an area with a low detection frequency) is given a high score and thus is likely to be selected as the target of the preset tour. Thus, the preset tour can be set in such a manner that image capturing is actively performed on a person making actions in a less crowded area in a crowded store or public place.

On the other hand, in a case where a small number of image analysis results has been obtained in the monitoring target range and thus it is assumed that a small number of people has appeared over the entire range, a calculation method may be selected in which an area with a large number of people (an area with a high detection frequency) is given a high score and thus is likely to be selected as the target of the preset tour. Thus, the preset tour can be set in such a manner that the image capturing is actively performed on an intruder or a suspicious person in a closed store or a parking lot where a person rarely appears.

The preset information may be determined for each time zone (such as morning, afternoon, and evening) in which an image used for the image analysis is captured. In this case, the preset tour is performed by switching preset information as a reference in accordance with a time zone in which the present tour image capturing is performed. Thus, even when object existence probability in the monitoring target range differs among the time zones, the preset tour image capturing can be appropriately performed by flexibly switching an angle of view. The preset information may be determined in accordance with an external factor other than the time zone described above, such as weather, date, day of the week, season, and temperature.

In Fig. 8, the processing in steps S1 and S6 corresponds to processing executed by the angle of view control unit 126, the processing in step S2 corresponds to processing executed by the image acquisition unit 121, the processing in step S3 to step S5 corresponds to processing executed by the image analysis unit 123, and the processing in step S7 corresponds to processing executed by the communication unit 124.

In Fig. 10, the processing executed in steps S11 and S18 corresponds to processing executed by the communication unit 141, the processing in step S12 corresponds to processing executed by the coordinate conversion unit 142, the processing in steps S13 and S14 corresponds to processing executed by the score calculation unit 143, and the processing executed in step S15 to step S17 corresponds to processing executed by the preset setting determination unit 144.

As described above, in the present exemplary embodiment, an image of the entire monitoring target range is captured and analyzed, and the preset information is determined by the analysis result. With the preset information determined based on the result of the pre-image analysis, the preset information suitable for monitoring within the monitoring target range can be determined.

An installer or a user him or herself needs to individually perform the preset tour setting for each camera. Some user might not know how to perform the preset tour setting or might not even know that the camera has the preset tour function in the first place. As a result, there are many cases that the installed camera, capable of performing image capturing over a wider range, is used as a fixed camera that performs image capturing only in the same range. In the present exemplary embodiment, the preset information can be automatically determined and updated. Thus, the preset tour setting can be performed so that image capturing over a wide range with a single camera is realized without requiring a user operation.

Whether the monitoring target is detected is analyzed for each of a plurality of areas in the monitoring target range. Thus, the preset information can be determined while taking into consideration an area where the monitoring target is likely to be detected (area where the monitoring target is likely to appear), an area where the monitoring target is not likely to be detected (area where the monitoring target is not likely to appear), and the like in the monitoring target range.

By setting the monitoring target is set to be at least one of the moving body, a person, and a face of a person, the monitoring can be appropriately performed for a target, for example, the moving body, such as a vehicle, a moving person, and a specific person.

The score corresponding to the image analysis result is set for each of the plurality of areas in the monitoring target range, and the preset image capturing position is determined in such a manner that an area with the score equal to the threshold value or higher is set at the center of the captured image. Thus, with the score calculation method in which an area, likely to be in demand for the active preset tour image capturing, is given a high score, the desired preset information can be appropriately determined.

For example, in a case where the score is set to be higher in an area with a higher monitoring target detection frequency, the preset information is determined in such a manner that the tour image capturing is performed on a path where a monitoring target (for example, a person) often passes by and the like. Thus, the crowdedness checking, monitoring of the action of a suspicious person, and the like can be appropriately performed. On the other hand, in a case where the score is set to be high for an area with a low monitoring target detection frequency, the preset information is determined in such a manner that the preset tour image capturing is performed on a location where a person rarely appears and the like.

The preset information can be more appropriately determined by setting the score weighted based on the area in the captured image in which the monitoring target is detected, the size of the monitoring target, monitoring target detection likelihood, and the like.

If a predetermined number of highest scores are selected and the preset image capturing positions are determined in such a manner that the areas corresponding to the selected scores are each set to be the center of the captured image, the preset tour image capturing can be performed on areas with high priorities. By setting the predetermined number, the number of registered preset image capturing positions can be prevented from being too large to be unsuitable for practical use.

The zoom magnification is determined in accordance with the size of the monitoring target (average value, median value, mode), and thus a captured image surely includes the monitoring target.

The image capturing time period during the preset tour is set to be longer at the preset image capturing position with a higher score. Thus, an area, likely to be in demand for active tour image capturing, can be intensively monitored.

The switching order (image capturing order) is determined in such a manner that the preset image capturing positions are switched in the descending order of the score. Thus, an area, likely to be in demand for active preset tour image, can be intensively monitored.

As described above, the preset information (image capturing angle of view, image capturing time period, and image capturing order) is determined based on the result of the pre-image analysis. Thus, by controlling the image capturing angle of view of the camera in such a manner that the camera tours around the preset image capturing positions with reference to the preset information determined as described above, the touring image capturing can be efficiently performed over the monitoring target range larger than the image capturing range of the camera, whereby the monitoring can be appropriately performed.

By determining the preset information for each of the image capturing time zone in which image used for the image analysis is captured, the referred preset information can be switched in accordance with the time zone in which the preset tour is performed. Thus, even in a case where object existence probability in the monitoring target range differs among the time zones, the angle of view can be flexibly switched and thus the touring image capturing can be appropriately performed.

When the preset information determined based on the image analysis result is presented to the user (for example, an observer) for getting the confirmation operation of the user, unnecessary preset information can be prevented from being registered, and the monitoring can be more appropriately performed.

In the exemplary embodiment described above, a case is mainly described where a single camera 20 is used. Alternatively, the present invention may be applied to a system including a plurality of the cameras 20.

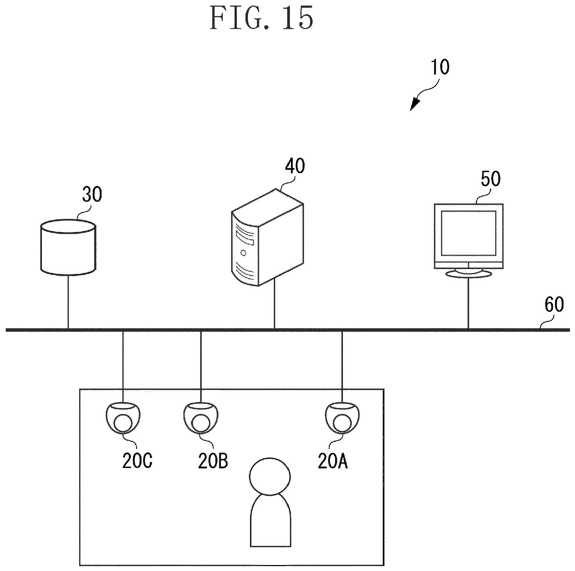

Fig. 15 is a diagram illustrating a network connection configuration representing an example of an operation environment of a network camera system including the plurality of cameras 20. As illustrated in Fig. 15, a plurality of (three) cameras 20A to 20C is used.

The camera 20A has the same configuration as the camera 20 described above, and thus has the PTZ changing function and can switch the angle of view.

On the other hand, the cameras 20B and 20C are fixed cameras that do not have the angle of view switching function. More specifically, the cameras 20B and 20C have the same configuration as the camera 20 except that the angle of view control unit 126 illustrated in Fig. 2 is not provided.

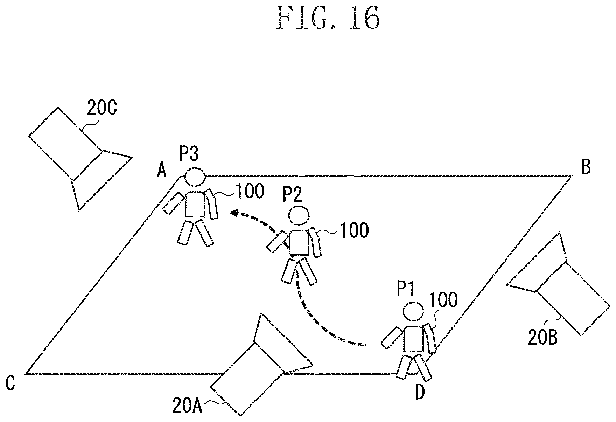

Fig. 16 is a diagram illustrating an arrangement example of the cameras 20A to 20C.

As illustrated in Fig. 16, the cameras 20A to 20C monitor the same monitoring target range defined by the ABCD plane.

Here, not only the camera 20A but also the cameras 20B and 20C transmit the image analysis result to the storage apparatus 30. Thus, in the preset setting processing executed by the server apparatus 40, the image analysis results obtained by the cameras 20B and 20C can be used in addition to the image analysis result obtained by the camera 20A.

As described above, the plurality of cameras 20A to 20C is used and the preset information is determined by using the image analysis results from the cameras 20A to 20C. By thus using the plurality of cameras in combination, the time required for initial setup and updating can be shortened.

The number of cameras is not limited to that in Fig. 15, as long as at least one camera having the angle of view changing function needs to be provided, and any other camera may or may not have the angle of view changing function.

In the exemplary embodiment described above, the image analysis processing is executed on a side of the camera (image capturing apparatus). Alternatively, the image analysis processing may be executed by the server apparatus 40. More specifically, the server apparatus 40 may include the image analysis unit 123 illustrated in Fig. 2.

The preset setting processing, executed by the server apparatus 40 according to the exemplary embodiment described above, may be executed by the camera 20 or the image display apparatus 50. In the exemplary embodiment described above, the image data file from the camera 20 is stored in the storage apparatus 30. Alternatively, the image data file may be held by the camera 20 or the image display apparatus 50.

In the exemplary embodiment described above, the preset information is determined by analyzing an image captured by the camera 20 that performs the preset tour. Alternatively, the preset information may be determined by analyzing an image captured by a camera different from the camera 20 that performs the preset tour, as long as the image obtained by the image capturing performed over the entire monitoring target range can be analyzed.

With the configuration according to the exemplary embodiment described above, information for touring image capturing performed by an image capturing apparatus, such as a camera, can be more easily set.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An image processing apparatus comprising:
an image capturing control means adapted to control an image capturing apparatus to capture a plurality of images in a first state in one or more image capturing positions during a predetermined period of time for each position;
a determination means adapted to determine one or more image capturing positions to be adopted by the image capturing apparatus in a preset tour state, by using a result of human detection processing performed on the images captured at each image capturing position in the first state by the image capturing apparatus;
wherein the image capturing control means is further adapted to control the image capturing apparatus to perform the image capturing in the preset tour state by adopting the one or more image capturing positions determined by the determination means.

2. The image processing apparatus according to claim 1, wherein the determination means is adapted to further determine an image capturing time period for each image capturing position of the set of positions, by using the result of human detection processing performed on the images captured by the image capturing apparatus in the first state.

3. The image processing apparatus according to claim 1, wherein the determination means is adapted to further determine an image capturing order for the set of positions, by using the result of human detection processing performed on the images captured by the image capturing apparatus in the first state.

4. The image processing apparatus according to claim 1, further comprising an analysis means adapted to detect a human by using a detection result of at least any one of a movement, a human body, and a face from the image captured by the image capturing apparatus,
wherein the determination means is adapted to determine image capturing positions to be adopted to the image capturing apparatus in the preset tour state, based on a position of the human detected by the analysis means, from the images captured at each image capturing position by the image capturing apparatus in the first state.

5. The image processing apparatus according to claim 1, further comprising analysis means adapted to detect a human from the images captured by the image capturing apparatus through comparison between the images captured by the image capturing apparatus and a predetermined image pattern,
wherein the determination means is adapted to determine an image capturing position to be adopted to the image capturing apparatus in the preset tour state, based on a position of the human detected by the analysis means from the images captured at each image capturing position by the image capturing apparatus in the first state.

6. The image processing apparatus according to claim 4, wherein the determination means is adapted to divide an image capturing range of the image capturing apparatus into a plurality of areas, set a score for each of the divided areas in accordance with a detection of at least any one of movement, a human body, and/or face in the corresponding divided area, and determine an image capturing position of the set of positions, based on the score set for each of the divided areas.

7. The image processing apparatus according to claim 6, wherein the determination means is adapted to determine image capturing positions, in such a manner that a divided area, among the plurality of divided areas, that corresponds to a number of detected humans equal to or higher than a threshold is captured in the preset tour state.

8. The image processing apparatus according to claim 6, wherein the determination means is adapted to determine image capturing positions, in such a manner that a divided area, among the plurality of divided areas, that corresponds to a number of detected humans lower than a threshold is captured in the second state.

9. The image processing apparatus according to claim 6, wherein the determination means is adapted to further set the score by weighting at least one of a position or detection likelihood, the position being a position of a monitoring target specified based on a detection of movement, a human body, and/or a face in the captured image, the detection likelihood being detection likelihood of the monitoring target.

10. The image processing apparatus according to claim 1, wherein the determination means is adapted to determine a zoom magnification of the image capturing apparatus for performing the image capturing at said adopted positions in the preset tour state, in accordance with at least one of an average value, a median value, or a mode of a size of a monitoring target specified by the result of the human detection processing on the image captured in the first state.

11. The image processing apparatus according to claim 1, further comprising a display control means adapted to display on a display screen the image capturing position determined by the determination means.

12. The image processing apparatus according to claim 1, wherein the determination means is adapted to determine an image capturing position to be adopted in the preset tour state for each image capturing time zone.

13. A method for controlling an image processing apparatus, the method comprising:
initially controlling an image capturing apparatus to capture a plurality of images in a first state in one or more image capturing positions during a predetermined period of time for each position;
determining one or more image capturing positions to be adopted by the image capturing apparatus in a preset tour state, by using a result of human detection processing performed on the images captured at each image capturing position in the first state by the image capturing apparatus; and
subsequently controlling the image capturing apparatus to perform the image capturing in the preset tour state by adopting the one or more image capturing positions determined in the determining step.

14. The controlling method according to claim 13, wherein the step of determining further determines an image capturing time period for each image capturing position of the set of positions, by using the result of human detection processing performed on the images captured by the image capturing apparatus in the first state.

15. A program comprising instructions which, when executed by a computer, cause that computer to execute the method of any one of claims 13 to 14.

## Patentansprüche

1. Bildverarbeitungsvorrichtung, umfassend:
eine Bildaufnahmesteuereinrichtung, die ausgelegt ist, eine Bildaufnahmevorrichtung zu steuern, in einem ersten Zustand an einer oder mehreren Bildaufnahmepositionen während eines vorbestimmten Zeitraums mehrere Bilder für eine jeweilige Position aufzunehmen;
eine Bestimmungseinrichtung, die ausgelegt ist, eine oder mehrere Bildaufnahmepositionen zu bestimmen, die in einem voreingestellten Tour-Zustand durch die Bildaufnahmevorrichtung einzunehmen sind, indem sie ein Ergebnis einer Verarbeitung zum Detektieren eines Menschen verwendet, die an den durch die Bildaufnahmevorrichtung im ersten Zustand an einer jeweiligen Bildaufnahmeposition aufgenommenen Bildern durchgeführt wird;
wobei die Bildaufnahmesteuereinrichtung ferner ausgelegt ist, die Bildaufnahmevorrichtung zu steuern, die Bildaufnahme im voreingestellten Tour-Zustand durchzuführen, indem sie die durch die Bestimmungseinrichtung bestimmten eine oder mehreren Bildaufnahmepositionen übernimmt.

2. Bildverarbeitungsvorrichtung nach Anspruch 1, wobei die Bestimmungseinrichtung ausgelegt ist, weiterhin einen Bildaufnahmezeitraum für eine jeweilige Bildaufnahmeposition des Satzes an Positionen zu bestimmten, indem sie das Ergebnis der Verarbeitung zum Detektieren eines Menschen verwendet, die an den durch die Bildaufnahmevorrichtung im ersten Zustand aufgenommenen Bildern durchgeführt wurde.

3. Bildverarbeitungsvorrichtung nach Anspruch 1, wobei die Bestimmungseinrichtung ausgelegt ist, ferner eine Reihenfolge der Bildaufnahme für den Satz an Positionen zu bestimmen, indem sie das Ergebnis der Verarbeitung zum Detektieren eines Menschen verwendet, die an den durch die Bildaufnahmevorrichtung im ersten Zustand aufgenommenen Bildern durchgeführt wurde.

4. Bildverarbeitungsvorrichtung nach Anspruch 1, die ferner eine Analyseeinrichtung umfasst, die ausgelegt ist, aus dem durch die Bildaufnahmevorrichtung aufgenommenen Bild einen Menschen zu detektieren, indem sie ein Detektionsergebnis von mindestens einem von einer Bewegung, einem menschlichen Körper, und einem Gesicht verwendet,
wobei die Bestimmungseinrichtung ausgelegt ist, basierend auf einer durch die Analyseeinrichtung detektierten Position des Menschen durch die Bildaufnahmevorrichtung im voreingestellten Tour-Zustand einzunehmende Bildaufnahmepositionen aus den Bildern zu bestimmen, die durch die Bildaufnahmevorrichtung im ersten Zustand an einer jeweiligen Bildaufnahmeposition aufgenommen wurden.

5. Bildverarbeitungsvorrichtung nach Anspruch 1, ferner umfassend eine Analyseeinrichtung, die ausgelegt ist, einen Menschen aus den durch die Bildaufnahmevorrichtung aufgenommenen Bildern zu detektieren, und zwar durch Vergleich der durch die Bildaufnahmevorrichtung aufgenommenen Bilder mit einem vorbestimmten Bildmuster,
wobei die Bestimmungseinrichtung ausgelegt ist, eine durch die Bildaufnahmevorrichtung im voreingestellten Tour-Zustand zu übernehmende Bildaufnahmeposition zu bestimmen, und zwar basierend auf einer Position des Menschen, die die Analyseeinrichtung aus den Bildern detektiert hat, welche die Bildaufnahmevorrichtung im ersten Zustand an einer jeweiligen Bildaufnahmeposition aufgenommen hat.

6. Bildverarbeitungsvorrichtung nach Anspruch 4, wobei die Bestimmungseinrichtung ausgelegt ist, einen Bildaufnahmebereich der Bildaufnahmevorrichtung in mehrere Gebiete zu teilen, entsprechend einer Detektion von mindestens einem von einer Bewegung, einem menschlichen Körper und/oder Gesicht im entsprechenden geteilten Gebiet einen Wert für ein jeweiliges der geteilten Gebiete festzulegen, und basierend auf dem für das jeweilige der geteilten Gebiete festgelegten Wert eine Bildaufnahmeposition aus dem Satz an Positionen zu bestimmen.

7. Bildverarbeitungsvorrichtung nach Anspruch 6, wobei die Bestimmungseinrichtung ausgelegt ist, Bildaufnahmepositionen so zu bestimmen, dass ein geteiltes Gebiet aus den mehreren geteilten Gebieten, das einer Anzahl detektierter Menschen entspricht, die gleich viel wie oder mehr als ein Schwellenwert ist, im voreingestellten Tour-Zustand aufgenommen wird.

8. Bildverarbeitungsvorrichtung nach Anspruch 6, wobei die Bestimmungseinrichtung ausgelegt ist, Bildaufnahmepositionen so zu bestimmen, dass ein geteiltes Gebiet aus den mehreren geteilten Gebieten, das einer Anzahl detektierter Menschen entspricht, die weniger als ein Schwellenwert ist, im zweiten Zustand aufgenommen wird.

9. Bildverarbeitungsvorrichtung nach Anspruch 6, wobei die Bestimmungseinrichtung ausgelegt ist, ferner den Wert durch Gewichten einer Position und/oder einer Detektionswahrscheinlichkeit festzulegen, wobei die Position eine Position eines Überwachungsziels ist, das basierend auf einer Detektion einer Bewegung, eines menschlichen Körpers und/oder Gesichts im aufgenommenen Bild spezifiziert wird, und wobei die Detektionswahrscheinlichkeit die Detektionswahrscheinlichkeit des Überwachungsziels ist.

10. Bildverarbeitungsvorrichtung nach Anspruch 1, wobei die Bestimmungseinrichtung ausgelegt ist, eine Zoomvergrößerung der Bildaufnahmevorrichtung zu bestimmen, um im voreingestellten Tour-Zustand die Bildaufnahme an den übernommenen Positionen durchzuführen, entsprechend mindestens einem von einem Durchschnittswert, einem Mittelwert, und einem Modus einer Größe eines Überwachsungsziels, das durch das Ergebnis der Verarbeitung zum Detektieren eines Menschen am im ersten Zustand aufgenommenen Bild spezifiziert ist.

11. Bildverarbeitungsvorrichtung nach Anspruch 1, die weiterhin eine Anzeigesteuereinrichtung umfasst, die ausgelegt ist, auf einem Anzeigebildschirm die durch die Bestimmungseinrichtung bestimmte Bildaufnahmeposition anzuzeigen.

12. Bildverarbeitungsvorrichtung nach Anspruch 1, wobei die Bestimmungseinrichtung ausgelegt ist, eine im voreingestellten Tour-Zustand einzunehmende Bildaufnahmeposition für jede Bildaufnahmezeitzone zu bestimmen.

13. Verfahren zum Steuern einer Bildverarbeitungsvorrichtung, wobei das Verfahren umfasst:
zunächst Steuern einer Bildaufnahmevorrichtung, in einem ersten Zustand mehrere Bilder an einer oder mehreren Bildaufnahmepositionen während eines vorbestimmten Zeitraums für eine jeweilige Position aufzunehmen;
Bestimmen von einer oder mehreren Bildaufnahmepositionen, die durch die Bildaufnahmevorrichtung in einem voreingestellten Tour-Zustand einzunehmen sind, durch Verwenden eines Ergebnis einer Verarbeitung zum Detektieren eines Menschen, die an den durch die Bildaufnahmevorrichtung im ersten Zustand an einer jeweiligen Bildaufnahmeposition aufgenommenen Bildern durchgeführt wird; und
darauffolgendes Steuern der Bildaufnahmevorrichtung, die Bildaufnahme im voreingestellten Tour-Zustand durchzuführen, indem sie die im Bestimmungsschritt bestimmten eine oder mehreren Bildaufnahmepositionen übernimmt.

14. Steuerverfahren nach Anspruch 13, wobei der Bestimmungsschritt ferner einen Bildaufnahmezeitraum für eine jeweilige Bildaufnahmeposition des Satzes an Positionen bestimmt, indem das Ergebnis einer Verarbeitung zum Detektieren eines Menschen verwendet wird, die an den durch die Bildaufnahmevorrichtung im ersten Zustand aufgenommenen Bildern durchgeführt wird.

15. Programm, das Anweisungen umfasst, welche bei Ausführen durch einen Computer diesen Computer veranlassen, das Verfahren nach einem der Ansprüche 13 bis 14 auszuführen.

## Revendications

1. Appareil de traitement d'images, comprenant :
un moyen de commande de capture d'images apte à commander un appareil de capture d'images pour capturer une pluralité d'images dans un premier état dans une ou plusieurs positions de capture d'images pendant une période de temps prédéterminée pour chaque position ;
un moyen de détermination apte à déterminer une ou plusieurs positions de capture d'images à adopter par l'appareil de capture d'images dans un état de séquence de contrôle prédéfinie, en utilisant un résultat de traitement de détection humaine appliqué aux images capturées à chaque position de capture d'images dans le premier état par l'appareil de capture d'images ;
dans lequel le moyen de commande de capture d'images est en outre apte à commander l'appareil de capture d'images pour exécuter la capture d'images dans l'état de séquence de contrôle prédéfinie en adoptant les une ou plusieurs positions de capture d'images déterminées par le moyen de détermination.

2. Appareil de traitement d'images selon la revendication 1, dans lequel le moyen de détermination est apte à déterminer en outre une période de temps de capture d'images pour chaque position de capture d'images de l'ensemble de positions, en utilisant le résultat de traitement de détection humaine appliqué aux images capturées par l'appareil de capture d'images dans le premier état.

3. Appareil de traitement d'images selon la revendication 1, dans lequel le moyen de détermination est apte à déterminer en outre un ordre de capture d'images de l'ensemble de positions, en utilisant le résultat de traitement de détection humaine appliqué aux images capturées par l'appareil de capture d'images dans le premier état.

4. Appareil de traitement d'images selon la revendication 1, comprenant en outre un moyen d'analyse apte à détecter un humain en utilisant un résultat de détection d'au moins un élément quelconque parmi un mouvement, un corps humain, et un visage dans l'image capturée par l'appareil de capture d'images,
dans lequel le moyen de détermination est apte à déterminer des positions de capture d'images à adopter par l'appareil de capture d'images dans l'état de séquence de contrôle prédéfinie, sur la base d'une position de l'humain détecté par le moyen d'analyse, à partir des images capturées à chaque position de capture d'images par l'appareil de capture d'images dans le premier état.

5. Appareil de traitement d'images selon la revendication 1, comprenant en outre un moyen d'analyse apte à détecter un humain à partir des images capturées par l'appareil de capture d'images par le biais d'une comparaison entre les images capturées par l'appareil de capture d'images et un modèle d'image prédéterminé,
dans lequel le moyen de détermination est apte à déterminer une position de capture d'images à adopter par l'appareil de capture d'image dans l'état de séquence de contrôle prédéfinie, sur la base d'une position de l'humain détecté par le moyen d'analyse à partir des images capturées à chaque position de capture d'images par l'appareil de capture d'images dans le premier état.

6. Appareil de traitement d'images selon la revendication 4, dans lequel le moyen de détermination est apte à diviser une plage de capture d'image de l'appareil de capture d'image en une pluralité de zones, à définir un score pour chacune des zones divisées conformément à une détection d'au moins un élément quelconque parmi un mouvement, un corps humain et/ou un visage dans la zone divisée correspondante, et à déterminer une position de capture d'images de l'ensemble de positions, sur la base du score défini pour chacune des zones divisées.

7. Appareil de traitement d'images selon la revendication 6, dans lequel le moyen de détermination est apte à déterminer des positions de capture d'images, de sorte qu'une zone divisée, parmi la pluralité de zones divisées, qui correspond à un nombre d'humains détectés égal ou supérieur à un seuil, soit capturée dans l'état de séquence de contrôle prédéfinie.

8. Appareil de traitement d'images selon la revendication 6, dans lequel le moyen de détermination est apte à déterminer des positions de capture d'images, de sorte qu'une zone divisée, parmi la pluralité de zones divisées, qui correspond à un nombre d'humains détectés inférieur à un seuil, soit capturée dans le deuxième état.

9. Appareil de traitement d'images selon la revendication 6, dans lequel le moyen de détermination est apte à définir en outre le score par une pondération d'au moins l'une d'une position ou d'une probabilité de détection, la position étant une position d'une cible de surveillance spécifiée sur la base d'une détection de mouvement, d'un corps humain et/ou d'un visage dans l'image capturée, la probabilité de détection étant une probabilité de détection de la cible de surveillance.

10. Appareil de traitement d'images selon la revendication 1, dans lequel le moyen de détermination est apte à déterminer un grossissement de zoom de l'appareil de capture d'images pour exécuter la capture d'images auxdites positions adoptées dans l'état de séquence de contrôle prédéfinie, conformément à au moins l'un parmi une valeur de moyenne, une valeur médiane ou un mode d'une taille d'une cible de surveillance spécifiée par le résultat du traitement de détection humaine appliqué à l'image capturée dans le premier état.

11. Appareil de traitement d'images selon la revendication 1, comprenant en outre un moyen de commande d'affichage apte à afficher, sur un écran d'affichage, la position de capture d'images déterminée par le moyen de détermination.

12. Appareil de traitement d'images selon la revendication 1, dans lequel le moyen de détermination est apte à déterminer une position de capture d'images à adopter dans l'état de séquence de contrôle prédéfinie pour chaque zone temporelle de capture d'images.

13. Procédé de commande d'un appareil de capture d'images, le procédé comprenant les étapes consistant à :
commander initialement un appareil de capture d'images pour capturer une pluralité d'images dans un premier état dans une ou plusieurs positions de capture d'images pendant une période de temps prédéterminée pour chaque position ;
déterminer une ou plusieurs positions de capture d'images à adopter par l'appareil de capture d'images dans un état de séquence de contrôle prédéfinie, en utilisant un résultat d'un traitement de détection humaine appliqué aux images capturées à chaque position de capture d'images dans le premier état par l'appareil de capture d'images ; et
commander ultérieurement l'appareil de capture d'images pour exécuter la capture d'images dans l'état de séquence de contrôle prédéfinie en adoptant les une ou plusieurs positions de capture d'images déterminées à l'étape de détermination.

14. Procédé de commande selon la revendication 13, dans lequel l'étape de détermination consiste en outre à déterminer une période de temps de capture d'images pour chaque position de capture d'images de l'ensemble de positions, en utilisant le résultat de traitement de détection humaine appliqué aux images capturées par l'appareil de capture d'images dans le premier état.

15. Programme comprenant des instructions qui, lorsqu'elles sont exécutées par un ordinateur, amènent l'ordinateur à mettre en oeuvre le procédé selon l'une quelconque des revendications 13 et 14.
